# FASCICULE DE BREVET EUROPEEN

(11) **EP 1 441 824 B1**
(45) Date de publication et mention de la délivrance du brevet: **14.09.2005**
(21) Numéro de dépôt: 02796811.4
(22) Date de dépôt: 18.10.2002
(51) Int. Cl.: B01D 11/04

(54) **EXTRACTEURS LIQUIDE-LIQUIDE MONTES EN BATTERIE**
BATTERIEMONTIERTE FLÜSSIG-FLÜSSIG-EXTRAKTOREN
BATTERY-MOUNTED LIQUID-LIQUID EXTRACTORS

(30) Priorité: 22.10.2001 FR 0113595
(43) Date de publication de la demande: 04.08.2004
(73) Titulaire: COMMISSARIAT A L'ENERGIE ATOMIQUE, 75752 Paris (FR)
(72) Inventeur: RIVALIER, Patrick, F-34130 Mauguio (FR); GANDI, Florent, F-30330 Saint-André d'Olerargues (FR); FERLAY, Gilles, F-30290 Laudun (FR)
(74) Mandataire: Poulin, Gérard
(86) Numéro de dépôt international: PCT/FR2002/003581
(87) Numéro de publication internationale: WO 2003/035209

(56) Documents cités:
- US-A- 5 254 244
- US-A- 5 267 936
- US-A- 5 383 689

## Description

Cette invention a trait à une batterie d'extracteurs liquide-liquide.

Les extracteurs auxquels on s'intéresse ici sont des extracteurs centrifuges, extracteurs liquide-liquide compartimentés comprenant deux parties : 1/ un mélangeur où les deux phases sont agitées pour permettre le transfert d'un ou plusieurs solutés extractibles d'une phase à l'autre ; 2/ un décanteur où la séparation des phases s'effectue sous l'effet de la force centrifuge. Ces appareils sont généralement associés en batteries de plusieurs étages avec circulation à contre-courant des deux phases afin d'atteindre le taux d'extraction visé. Un procédé complet d'extraction liquide-liquide comporte généralement différentes étapes d'extraction, désextraction, lavage nécessitant dans la batterie des ajouts ou prélèvements de fluides. Une telle batterie d'extracteurs centrifuges est mentionnée dans un article paru dans "Nuclear Sciences and Techniques", volume 9, numéro 3 d'août 1998, de la page 157 à la page 162 et intitulé "Recent advances of annular centrifugal extractor for hot test of nuclear waste partitioning process": les extracteurs individuels sont introduits dans des alvéoles d'un support commun et reliés entre eux par des conduits. Un tel assemblage ne se prête malheureusement pas aisément à des adaptations, surtout si on considère qu'il se trouve dans une cellule blindée quand on doit traiter des corps dangereux et qu'on ne peut donc y accéder que par des télémanipulateurs aux possibilités limitées de manipulation.

L'objet de l'invention est de remédier aux défauts de ce genre de batterie et de proposer une batterie comprenant un nombre, pouvant éventuellement être grand, d'extracteurs individuels montés en série, tout en se gardant la possibilité de modifier aisément le système pour changer le nombre d'extracteurs ou les caractéristiques particulières du procédé.

Sous sa forme la plus générale, l'invention concerne ainsi un appareillage d'extraction liquide-liquide d'un mélange de deux phases liquides, comprenant une batterie d'extracteurs individuels alignés et reliés entre eux, et un support commun des extracteurs individuels, caractérisé en ce que le support consiste en des rails, les extracteurs individuels comprennent une base coulissante ou posée et verrouillée sur les rails, les extracteurs individuels sont reliés entre eux par des pièces intermédiaires comprenant des bases posées sur les rails avec un ajustement de position latéralement aux rails et coulissant sur les rails , et un système de serrage de la batterie d'extracteurs individuels et des pièces intermédiaires est compris dans l'appareillage d'extraction.

Les extracteurs individuels, semblables entre eux, sont donc interchangeables et ajoutés ou retranchés le long des rails. Comme les rails traversent en général la base d'extracteurs coulissants, ou comportent un système de verrouillage, tel qu'un ergot, d'extracteurs posés sur eux, ils les retiennent contre les mouvements latéraux et verticaux si bien qu'une bonne rigidité de la batterie est obtenue. Les pièces intermédiaires servant de liaison entre les extracteurs individuels comprennent en général des conduits permettant à un écoulement continu de chaque phase liquide de s'instaurer, mais elles peuvent aussi comprendre en cas de besoin des évents qui, en équilibrant les pressions entre les étages, assurent une bonne circulation des phases et par lesquels on peut introduire des additifs au mélange ou des conduits d'extraction ou de purge. Différents genres de pièces intermédiaires peuvent donc se révéler être utiles, et on peut aussi vouloir les changer pour modifier le processus d'extraction ; cela est facile puisque les pièces intermédiaires sont simplement posées sur les rails : il suffit d'écarter un peu les extracteurs individuels adjacents, de soulever la pièce intermédiaire et de la remplacer par la nouvelle avant de resserrer la batterie d'extracteurs. Enfin, le système de serrage permet d'instaurer et de maintenir la cohésion et l'étanchéité de la batterie pendant tout le processus d'extraction, tout en permettant un desserrage rapide de la batterie pour l'aménager à nouveau.

La batterie peut comprendre une ou deux pièces d'extrémité comprenant une base posée sur les rails avec un ajustement de position latéralement aux rails, coulissant sur les rails et reliant un extracteur individuel adjacent soit à une entrée ou une sortie de phases. Cette pièce d'extrémité est surtout utile dans des procédés d'extractions à contre-courant, où les extracteurs individuels sont parcourus par deux écoulements se croisant ; selon un dispositif légèrement différent, une des pièces d'extrémité peut aussi porter un dispositif de butée de la batterie qui fait partie du système de serrage en complément d'un moyen de serrage proprement dit qui est complètement dissocié et placé à l'autre extrémité des rails. Dans le cas où les deux pièces d'extrémité sont similaires, le système de serrage est symétrique de part et d'autre du rail.

L'invention comprend encore un certain nombre d'autres points originaux, qui seront mieux découverts par la suite ; certains d'entre eux permettent de faciliter l'assemblage, le serrage et l'aménagement des extracteurs individuels des pièces intermédiaires et du système de serrage. Une réalisation de l'invention sera maintenant décrite en liaison aux figures suivantes :
- la figure 1 représente la batterie d'extracteurs ;
- la figure 2 représente un extracteur individuel en coupe ;
- la figure 3 représente un extracteur individuel démonté ;
- la figure 4 illustre l'insertion des extracteurs individuels coulissants dans les rails ;

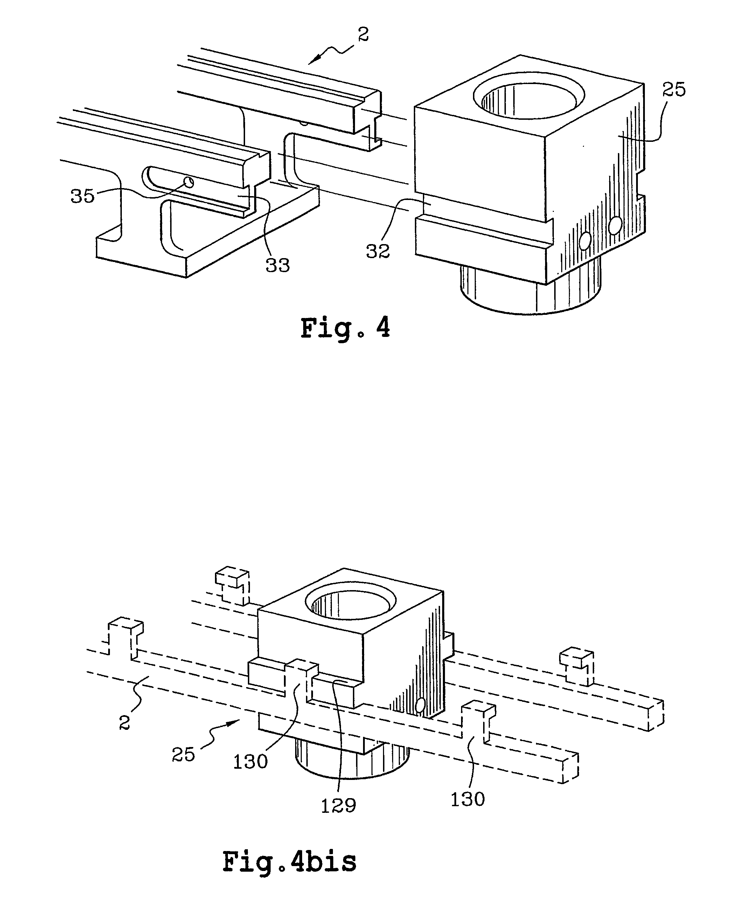

- la figure 4 bis représente des extracteurs individuels posés et verrouillés sur les rails ;

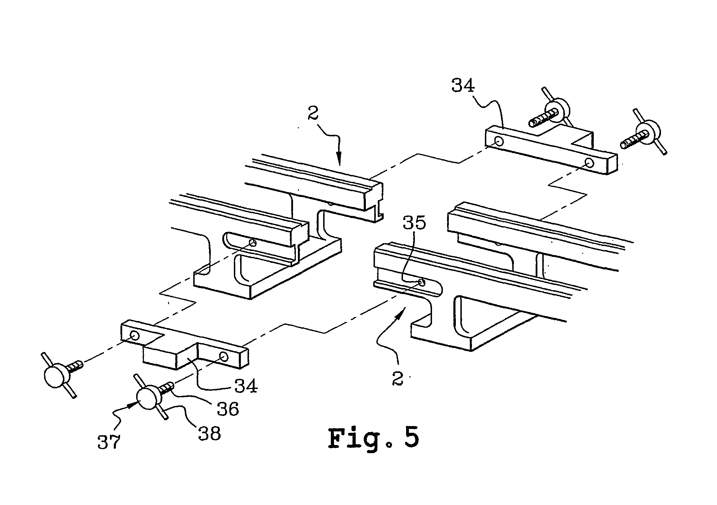

- la figure 5 illustre l'accouplement des rails ;

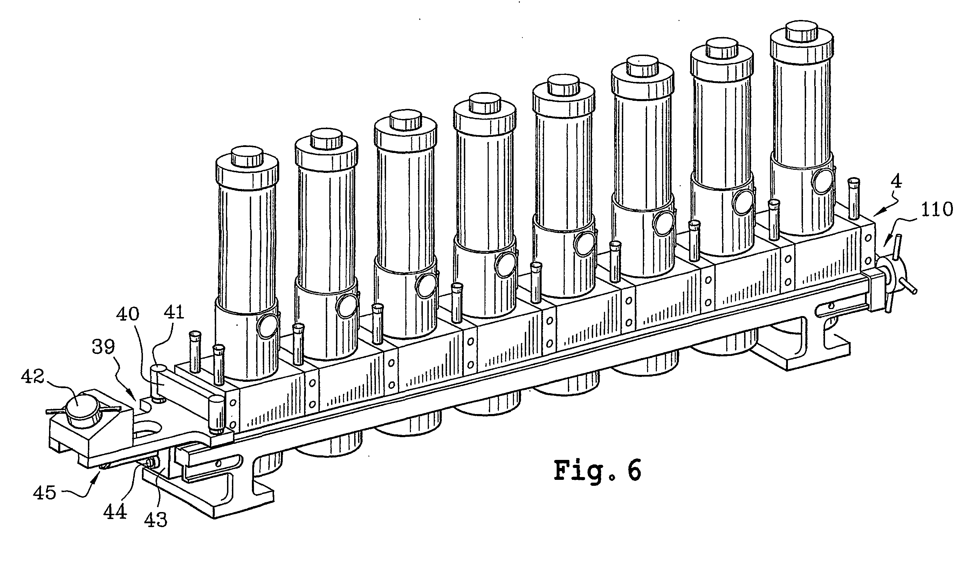

- la figure 6 représente le système de serrage ;

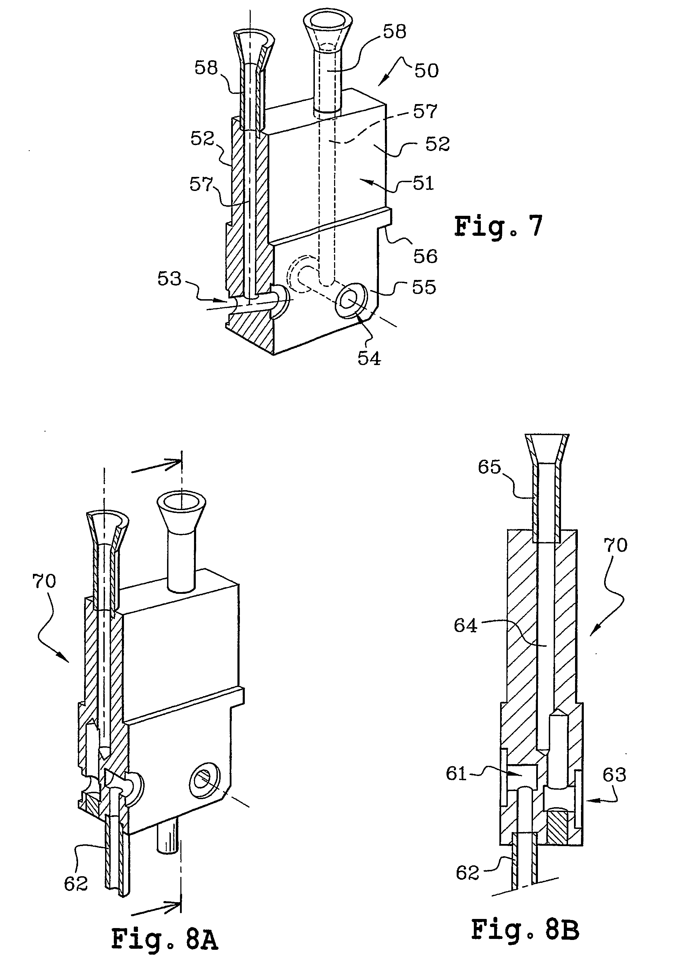

- et les figures 7, 8 (A et B), 9 (A et B), 10 et 11 et 12 représentent des pièces intermédiaires et d'extrémité.

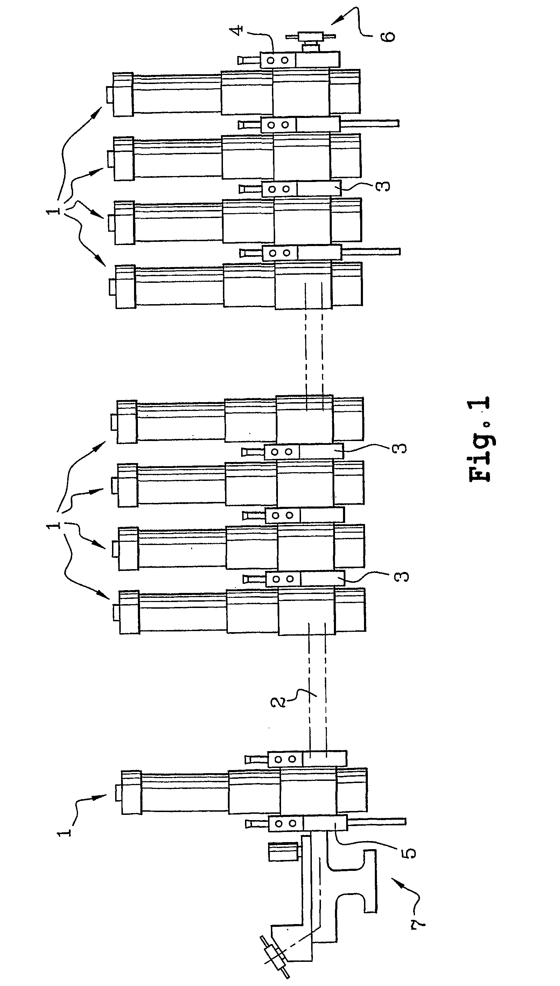

Dans ce mode de réalisation de l'invention, schématisé à la figure 1, l'extracteur comprend seize extracteurs individuels 1 dont seuls certains sont représentés et qui sont enfilés ou posés en batterie sur une paire de rails parallèles 2. Des pièces intermédiaires 3 sont intercalées entre des extracteurs individuels 1, ainsi qu'une première pièce d'extrémité 4 derrière le dernier extracteur 1 et une seconde pièce d'extrémité 5 devant le premier extracteur 1, qui présentent de nombreuses ressemblances avec les pièces intermédiaires 3. Enfin, un système de serrage composé d'une partie de butée 6 et d'une partie de poussée 7 maintient la batterie d'extracteurs individuels 1 et de pièces intermédiaires 3 (et 4 et 5) à un état comprimé.

Un autre mode de réalisation consiste à placer à chaque extrémité de la batterie deux pièces 5 et deux systèmes de poussée 7 symétriquement disposés qui remplissent alors également la fonction de butée.

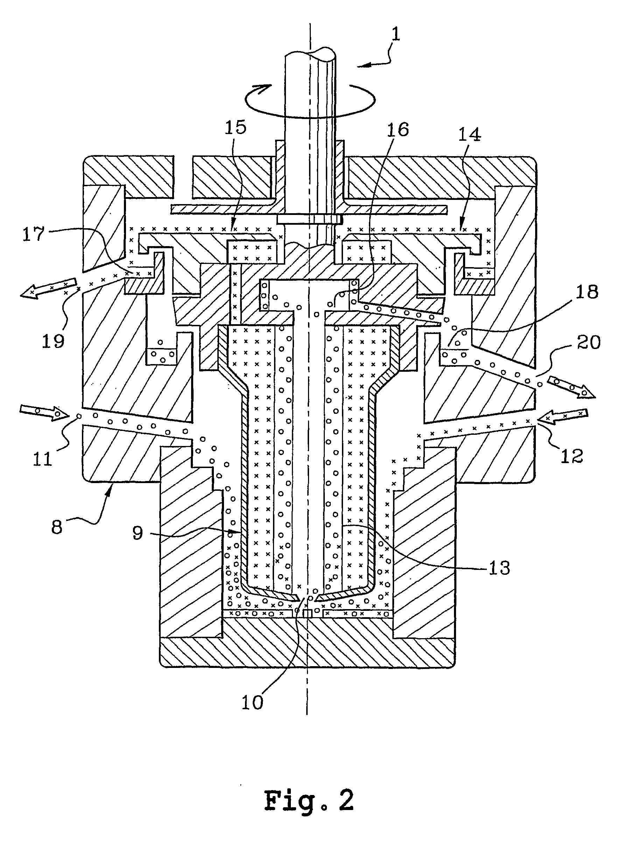

Le fonctionnement d'un extracteur individuel 1 (ci-après appelé simplement extracteur) sera décrit au moyen de la figure 2. Sa partie active est logée dans une cuve 8 et consiste en un bol 9 tournant autour d'un axe vertical et dont le fond est percé d'un trou central 10. La phase légère traverse l'extracteur 1 vers la droite, la phase lourde vers la gauche ; leurs entrées respectives, qui portent les références 11 et 12, leur permettent de couler au fond de la cuve 8 où s'effectue l'émulsion permettant le transfert du ou des solutés puis dans le bol 9 en traversant le trou 10. La rotation du bol 9 à grande vitesse produit une séparation des phases se positionnant de part et d'autre de l'interface 13 sensiblement cylindrique s'élevant jusqu'au sommet du bol 9.

La phase lourde touche un couvercle 14 muni d'un déversoir périphérique 15 qui offre un exutoire à la phase lourde ; de même un déversoir central 16 offre un exutoire à la phase légère ; ces déversoirs 15 et 16 aboutissent à des anneaux de recueil 17 et 18 usinés à des hauteurs différentes de la cuve 8 et qui communiquent avec la sortie de phase lourde 19 et celle de phase légère 20 respectivement. L'extracteur 1 est un extracteur à contre-courant des écoulements, où un mélange temporaire des phases est réalisé pour aboutir à une extraction d'un ou plusieurs solutés. On notera que les sorties 19 et 20 surplombent les entrées 11 et 12, ce qui permet de les brancher à des entrées d'extracteurs 1 semblables dans lesquels les fluides s'écoulent par gravité. Un grand nombre de ces extracteurs peut donc être mis en batterie.

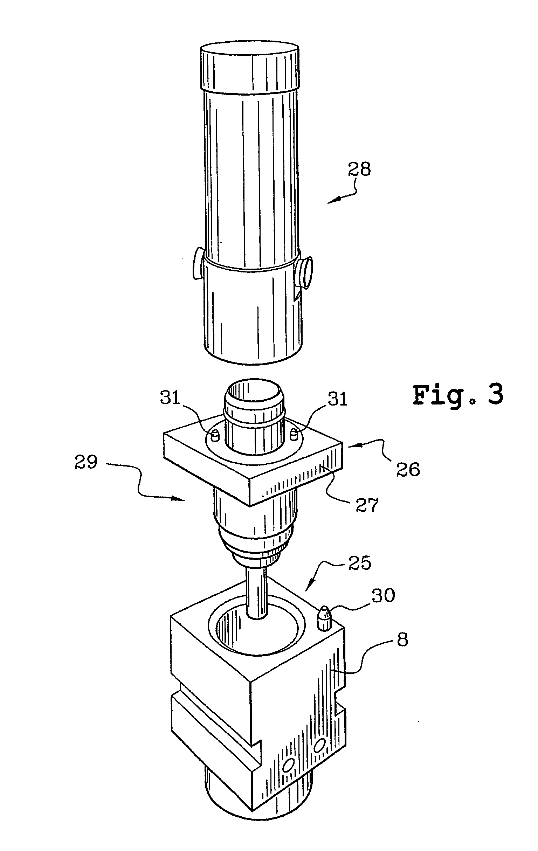

La figure 3 montre plus précisément que la structure de l'extracteur 1 est conçue pour être divisée en trois parties : la première est une base 25 comprenant essentiellement la cuve 8, les entrées et les sorties, la deuxième 26 comprend le bol 9 et un couvercle 27 qui le porte, et la partie supérieure 28 englobe le moteur 29 et son capot. Le couvercle 27 peut être posé sur le sommet de la cuve 8, un arrêt en rotation étant fourni par un pion de centrage 30 ; d'autres pions de centrage 31 sont prévus entre le couvercle 27 et le capot du moteur 29. L'ajustement du bol 9 dans la cuve 8 se fait en fonctionnement par des paliers non représentés, ainsi qu'il est connu, et l'ajustement du moteur 29 au bol 9 se fait par un accouplement d'arbres. Il s'agit d'un accouplement spécifique permettant notamment un auto-centrage. L'avantage de ces dispositions est que chacun des extracteurs individuels 1 peut être démonté en soulevant les parties 26 et 28 successivement empilées sur la partie de base 25, par de simples mouvements verticaux et par conséquent par un télémanipulateur.

La figure 4 montre que les bases 25 des extracteurs coulissants sont pourvues de rainures 32 horizontales qui permettent de les glisser entre les rails 2 en étant soutenues par ceux-ci. La figure 4 bis montre que les bases 25 des extracteurs posés peuvent comporter par exemple un épaulement 129 et des ergots 130 érigés régulièrement sur les rails 2 verrouillent les extracteurs en s'appuyant sur les épaulements 129. Cependant, les ergots 130 sont assez écartés pour qu'on puisse placer les extracteurs entre eux et les soulever pour les retirer. L'écartement des ergots 130 peut-être d'une largeur d'extracteur plus une largeur de pièce intermédiaire. Les parties 26 et 28 peuvent être posées ensuite sur les parties de base 25. Comme on l'a déjà mentionné, un nombre quelconque d'extracteurs 1 peut être enfilé ou posé sur les rails 2 ; on peut toutefois souhaiter limiter la longueur des rails 2, mais si on éprouve ensuite le besoin d'ajouter un nombre d'extracteurs 1 exigeant une longueur plus grande, les rails 2 peuvent être joints en prolongement et assemblés d'après la figure 5 : ils sont pourvus à cet effet d'encoches 33 à leurs extrémités, tournées vers l'extérieur et recevant une clavette de raccordement 34 chevauchant les encoches 33 en prolongement. La clavette 34 est percée et un filetage s'étend dans un trou en prolongement 35 du rail 2, pour qu'on puisse fixer les clavettes en plaçant sur elles des vis 36 qui s'engagent dans les trous filetés 35 et retiennent les clavettes 34 dans les encoches 33 ; les vis 36 ont une tête 37 en forme de cabestan, c'est-à-dire présentant des tiges rayonnantes 38, qui permettent d'être manipulées facilement par des bras télémanipulateurs.

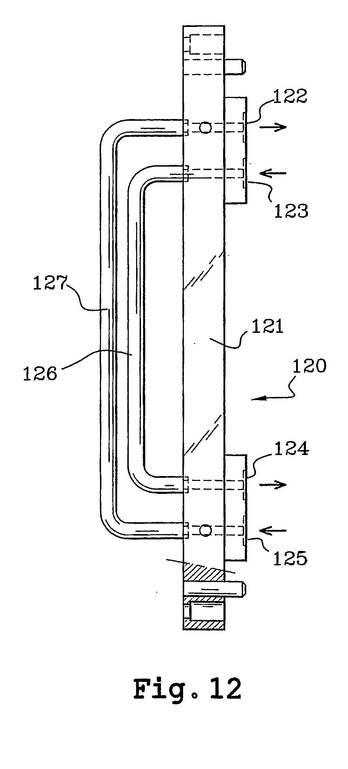

Existe également un pièce d'extrémité dite double qui permet d'assurer la circulation à contre-courant des phases dans des extracteurs enfilés ou posés sur des paires de rails disposés en parallèle. Elle porte la référence 120 à la figure 12, qui la représente du dessus : elle est taillée dans un bloc 121 plus large que les autres pièces, et comprend quatre perçages 122, 123, 124 et 125 opposés par paires aux extrémités latérales du bloc 121 ; deux tuyaux 126 et 127 relient les perçages de paires différentes deux à deux. Une des phases liquides peut ainsi passer d'une batterie d'extracteurs à une batterie parallèle par le perçage 123 et 124 et le tuyau 126, et l'autre phase de ladite batterie parallèle à la batterie mentionnée en premier par les perçages 125 et 122 et le tuyau 127. Cette pièce d'extrémité 120 peut exempter l'utilisateur de l'extracteur global de devoir accoupler des rails en prolongement.

D'une façon générale, les extracteurs individuels et les pièces intermédiaires sont en conctact par des faces planes et verticales.

On passe maintenant à la description du système de serrage, dont on notera qu'il est conçu de façon à être télémanipulable.

La partie de poussée 7 du système de serrage est illustrée à la figure 6 et comprend un support 39, un cavalier 40 composé de deux colonnes 41 verticales verrouillant le support 39 et pénétrant dans des évidements des rails 2, ainsi qu'un cabestan de serrage 42 monté sur le support 39 et qui déplace un moyen tel qu'une butée 43 coulissante par une vis 44 reliée à l'axe du cabestan de serrage 42 par un cardan 45. La butée 43 agit comme la mâchoire mobile d'un étau, repoussant les extracteurs 1 vers la partie de butée 6 qui fait office de mâchoire fixe jusqu'à ce qu'ils soient serrés, ou vers un dispositif équivalent ; le cavalier 40 assure le verrouillage du système de serrage sur les rails 2. On va maintenant décrire quelques genres possibles de pièces intermédiaires 3, sans oublier les pièces d'extrémités 4 et 5.
Un genre courant de pièces intermédiaires permet la circulation libre d'un extracteur individuel 1 à l'autre et pour les deux phases. La pièce intermédiaire, ici référencée par 50 à la figure 7, consiste en un bloc 51 dont l'épaisseur est limitée par des faces planes 52 destinées à établir le contact avec des faces planes de la cuve 8 ; le bloc 51 est traversé par des conduits 53 et 54 dont chacun relie une sortie de phase d'un extracteur individuel 1 à l'entrée de la même phase d'un extracteur individuel 1 adjacent. Les conduits 53 et 54 sont à la hauteur et à l'inclinaison nécessaires pour établir de bonnes jonctions. Le bloc 51 présente une base 55 en forme de fiche à glisser entre les rails 2 pour maintenir la pièce 50, latéralement ; il est posé sur les rails 2 à la bonne hauteur par des épaulements 56 dirigés vers le bas et par lesquels la fiche 55 se joint au reste du bloc 51 ; un seul des épaulements apparaît ici, l'autre étant symétrique.

Dans cette réalisation particulière comme dans d'autres, les deux conduits 53 et 54 se joignent à un conduit vertical 57 débouchant en haut du bloc 51 par un tube 58 et destiné à équilibrer les pressions entre les extracteurs individuels et, selon le cas, soit à l'alimentation d'un fluide supplémentaire, soit. à un prélèvement d'une partie de l'écoulement pour des mesures. Une poignée ou un autre dispositif de préhension peut être ajouté pour faciliter la manipulation de la pièce 50 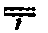 . Ces pièces comportent des gorges ouvertes conçues pour maintenir les joints en place pendant leur manipulation.

La réalisation des figures 8A et 8B porte la référence générale 70 et comprend, au lieu de conduits 53 et 54 de traversée de la réalisation précédente, deux dispositifs de remplacement de phase consistant en un branchement coudé 61 vers un conduit descendant 62 de purge et un autre branchement coudé 63, sans communication au précédent, menant à un conduit ascendant 64 d'alimentation finissant en un tube 65 au-dessus de la pièce 70 ; le produit introduit par le conduit d'alimentation 64 sert donc à remplacer la phase prélevée par le conduit descendant 62 dans la suite de la batterie. Par ailleurs, cette pièce comprend un bloc exactement semblable au bloc 51. Une autre réalisation, où on appliquerait le même chemin d'écoulement, avec deux branchements coudés identiques pour les deux écoulements est possible.

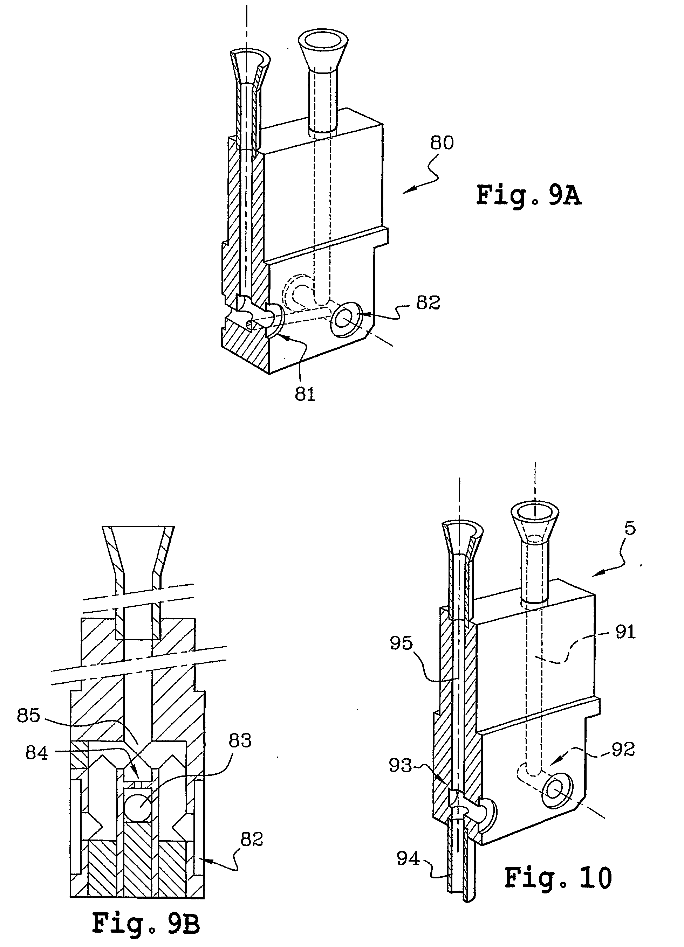

Les figures 9A et 9B illustrent encore une autre réalisation, référencée par 80, de pièce intermédiaire, dans laquelle un débit de recyclage d'une des phases est constitué dans l'extracteur : on retrouve des conduits de passage ressemblant sensiblement à ceux de la réalisation de la figure 7, et qui portent ici les références 81 et 82, et en outre un conduit de liaison 83 transversal reliant les précédents avec une pente destinée à susciter l'écoulement dans le sens souhaité ; un diaphragme 84 calibré permet de fixer le débit de recyclage parcourant le conduit de liaison 83. Pour que l'inclinaison du conduit de liaison 83 soit réalisée, il peut être nécessaire de façonner le conduit 82 de prélèvement pour qu'il forme un niveau supérieur 85 à l'intérieur de la pièce 80.

La pièce d'extrémité 5, toujours taillée dans un bloc de la forme du bloc 51, est illustrée à la figure 10. Elle comprend un conduit ascendant d'alimentation 91 pour une des phases, finissant en un branchement coudé 92, et un branchement coudé 93 finissant en un conduit descendant de purge 94 au bas de la pièce 5. Ici encore un conduit ascendant de prélèvement, ici 95, peut être ajouté pour déboucher dans le branchement coudé 93.

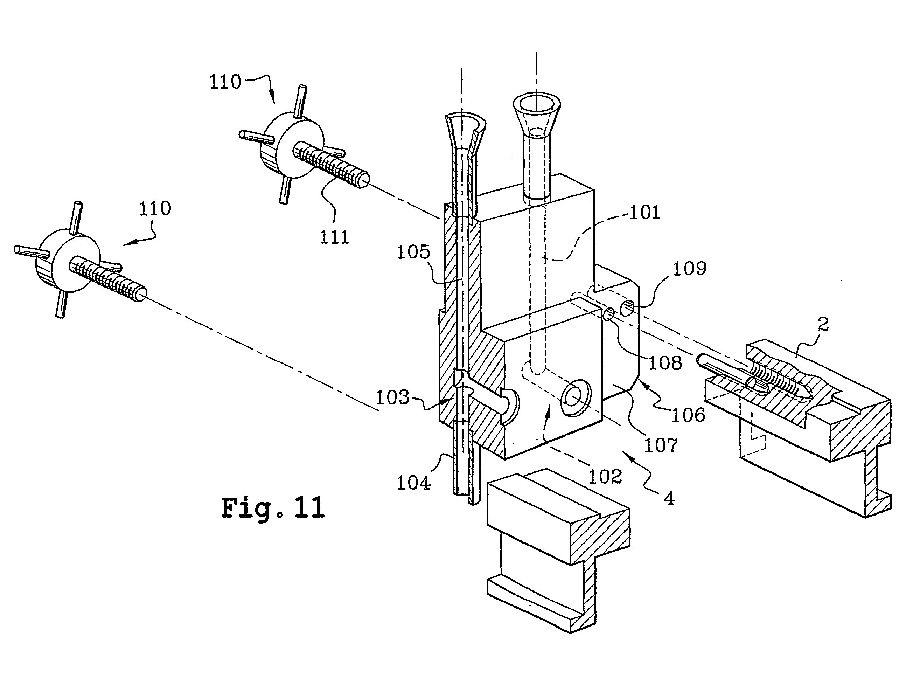

L'autre type de pièce d'extrémité 4, illustrée à la figure 11, ressemble quelque peu à la précédente en ce qu'elle comprend un conduit d'alimentation 101 débouchant vers le haut, un branchement coudé 102, un autre branchement coudé 103 de raccordement à un conduit descendant de purge 104, et qui peut être complété par un évent 105, mais cette pièce d'extrémité n'est pas posée sur les rails 2 mais fixée à eux : le corps 51 des réalisations précédentes est remplacé par un corps 106 d'une forme un peu différente et comprenant en particulier une paire de joues 107 dont chacune est munie d'un trou 108 de réception de pions des rails 2 et d'un cabestan de serrage 110, et d'un autre trou 109 de passage de la vis 111 du cabestan de serrage 110, qui pénètre dans un trou taraudé du rail 2. Ainsi, la première pièce d'extrémité 4 peut être posée au bout des rails 2, puis les cabestans de serrage placés derrière la première pièce d'extrémité 4. Ils sont alors vissés et bloquent la première pièce d'extrémité 4, et toute la batterie d'extracteurs 1.

Les pièces d'extrémité 4 et 5 ici décrites permettent d'introduire chacune des phases d'écoulement à une extrémité de la batterie et de la récupérer à l'autre extrémité.

Il faut remarquer qu'un changement d'une pièce intermédiaire 3 ne fait perdre que quelques gouttes des écoulements.

## Revendications

1. Extracteur liquide-liquide d'un mélange de deux phases liquides, comprenant une batterie d'extracteurs individuels (1) alignés et reliés entre eux, et un support commun des extracteurs individuels, **caractérisé en ce que** le support consiste en des rails (2), les extracteurs individuels comprennent une base (25) coulissante ou posée avec verrouillage sur les rails, les extracteurs individuels sont reliés entre eux par des pièces intermédiaires (3) comprenant des bases posées sur les rails avec un ajustement de position latéralement aux rails et coulissant sur les rails, et un système de serrage (6, 7) de la batterie d'extracteurs individuels et des pièces intermédiaires est compris dans l'extracteur.

2. Extracteur selon la revendication 1, **caractérisé en ce que** les extracteurs individuels sont des extracteurs centrifuges avec circulation à contre-courant des phases.

3. Extracteur selon la revendication 2, **caractérisé en ce qu'**il comprend une ou deux pièces d'extrémité (5) comprenant une base posée sur les rails avec un ajustement de position latéralement aux rails, coulissant sur les rails et reliant un extracteur individuel (1) adjacent soit à une entrée (91) ou une sortie (94) de phase du mélange.

4. Extracteur selon l'une quelconque des revendications 1 à 3, **caractérisé en ce que** le système de serrage comprend au plus un moyen de butée (6) à une extrémité des rails (2) et un ensemble de poussée (7) à au moins une extrémité opposée des rails, l'ensemble de poussée comprenant un moyen de fixation sur les rails, un poussoir et un moyen d'actionnement de poussoir.

5. Extracteur selon les revendications 3 et 4, **caractérisé en ce que** le moyen de butée est placé sur la pièce d'extrémité et consiste en un moyen de serrage de la pièce d'extrémité sur les rails.

6. Extracteur selon l'une quelconque des revendications 4 ou 5, **caractérisé en ce que** le moyen de fixation consiste en une paire de colonnes verticales (41), s'enfonçant dans les rails.

7. Extracteur selon l'une quelconque des revendications 1 à 6, **caractérisé en ce que** les rails sont munis de moyens de raccordement (34 à 38) à d'autres rails venant en prolongement.

8. Extracteur selon l'une quelconque des revendications 1 à 6, **caractérisé en ce que** les extracteurs individuels et les pièces intermédiaires sont en contact par des faces planes et verticales.

9. Extracteur selon l'une quelconques des revendications 1 à 8, **caractérisé en ce que** les extracteurs individuels sont composés de parties (25, 26, 28) successivement empilées sur la base et munies de moyens de centrage.

10. Extracteur selon l'une quelconque des revendications 1 à 9, **caractérisé en ce que** le système de serrage comprend au moins un cabestan (42) comme moyen d'actionnement.

11. Extracteur selon l'une quelconque des revendications 1 à 10, **caractérisé en ce que** les extracteurs individuels, les pièces intermédiaires et le système de serrage sont construits de façon à être télémanipulables.

## Patentansprüche

1. Flüssig-Flüssig-Extraktor einer Mischung aus zwei Flüssigphasen, eine Batterie individueller, in Reihe angeordneter und miteinander verbundener Extraktoren (1) und einen gemeinsamen Träger der individuellen Extraktoren umfassend,
**dadurch gekennzeichnet, dass** der Träger durch Schienen (2) gebildet wird, die individuellen Extraktoren eine in den Schienen verschiebbare oder mit Verriegelung darauf ruhende Basis (25) umfassen, die individuellen Extraktoren miteinander verbunden sind durch Zwischenstücke (3), deren Fußteile auf den Schienen ruhen, mit lateraler Positionierung in Bezug auf die Schienen und verschiebbar auf den Schienen, und der Extraktor ein Klemmsystem (6, 7) der Batterie aus den individuellen Extraktoren und den Zwischenstücken umfasst.

2. Extraktor nach Anspruch 1, **dadurch gekennzeichnet, dass** die individuellen Extraktoren Zentrifugalextraktoren mit Phasengegenstromumlauf sind.

3. Extraktor nach Anspruch 2, **dadurch gekennzeichnet, dass** er ein oder zwei Endstücke (5) mit auf den Schienen ruhendem Fußteil mit lateraler Positionierung in Bezug auf die Schienen umfasst, die in den Schienen verschiebbar sind und einen individuellen Extraktor (1) entweder mit einem Phaseneingang (91) oder einem Phasenausgang (94) der Mischung verbinden.

4. Extraktor nach einem der Ansprüche 1 bis 3, **dadurch gekennzeichnet, dass** das Klemmsystem höchstens eine Anschlageinrichtung (6) an einem Ende der Schienen (2) und ein Drucksystem (7) an wenigstens einem entgegengesetzten Ende der Schienen aufweist, wobei das Drucksystem eine Einrichtung zur Befestigung auf den Schienen, einen Drücker und eine Einrichtung zur Betätigung des Drückers umfasst.

5. Extraktor nach einem der Ansprüche 3 und 4, **dadurch gekennzeichnet, dass** die Anschlageinrichtung sich an dem Endstück befindet und gebildet wird durch eine Einrichtung zum Festklemmen des Endstücks an Schienen.

6. Extraktor nach einem der Ansprüche 4 oder 5, **dadurch gekennzeichnet, dass** die Befestigungseinrichtungen durch ein Paar vertikaler Säulen (41) gebildet werden, die in den Schienen stecken.

7. Extraktor nach einem der Ansprüche 1 bis 6, **dadurch gekennzeichnet, dass** die Schienen mit Einrichtungen (34 bis 38) zur Verbindung mit anderen, der Verlängerung dienenden Schienen ausgestattet sind.

8. Extraktor nach einem der Ansprüche 1 bis 6, **dadurch gekennzeichnet, dass** die Kontaktflächen der individuellen Extraktoren und der Zwischenstücke plan und vertikal sind.

9. Extraktor nach einem der Ansprüche 1 bis 8, **dadurch gekennzeichnet, dass** die individuellen Extraktoren durch sukzessiv auf der Basis gestapelte Teile (25, 26, 28) gebildet werden, die Zentrierungseinrichtungen umfassen.

10. Extraktor nach einem der Ansprüche 1 bis 9, **dadurch gekennzeichnet, dass** das Klemmsystem wenigstens eine Winde bzw. einen Drehgriff (42) als Betätigungseinrichtung umfasst.

11. Extraktor nach einem der Ansprüche 1 bis 10, **dadurch gekennzeichnet, dass** die individuellen Extraktoren, die Zwischenstücke und das Klemmsystem so konstruiert sind, dass sie fembedienbar sind.

## Claims

1. Liquid-liquid extractor for a mixture of two liquid phases, comprising a battery of individual extractors (1) aligned and connected to each other, and a common support for the individual extractors, **characterised in that** the support consists of rails (2), the individual extractors comprise a base (25), sliding or set by being locked on the rails, the individual extractors are connected together by intermediate parts (3) including bases set on the rails with lateral position adjustment relative to the rails and sliding on the rails, and a tightening system (6, 7) for the battery of individual extractors and intermediate parts is included in the extractor.

2. Extractor according to claim 1, **characterised in that** the individual extractors are centrifugal extractors with counter-current circulation of phases.

3. Extractor according to claim 2, **characterised in that** it comprises one or two end parts (5) comprising a base set on the rails with a lateral position adjustment relative to the rails, sliding on the rails and linking an adjacent individual extractor (1) either to an input (91) or to an outlet (94) of the mixture phase.

4. Extractor according to any one of claims 1 to 3, **characterised in that** the tightening system further comprises a stop means (6) at one end of the rails (2) and a push assembly (7) at at least one opposite end of the rails, the push assembly comprising a means for fixation on the rails, a pusher and means for activating the pusher.

5. Extractor according to claims 3 and 4, **characterised in that** the stop means is placed on the end part and consists of a means for tightening the end part on the rails.

6. Extractor according to either one of claims 4 or 5, **characterised in that** the fixation means consists of a pair of vertical columns (41), set into the rails.

7. Extractor according to any one of claims 1 to 6, **characterised in that** the rails are provided with means for connection (34 to 38) to other rails used as prolongation.

8. Extractor according to any one of claims 1 to 6, **characterised in that** the individual extractors and the intermediate parts are in contact through plane and vertical faces.

9. Extractor according to any one of claims 1 to 8, **characterised in that** the individual extractors are composed of parts (25, 26, 28) stacked successively on the base and provided with centring means.

10. Extractor according to any one of claims 1 to 9, **characterised in that** the tightening system comprises at least one capstan (42) as actuation means.

11. Extractor according to any one of claims 1 to 10, **characterised in that** the individual extractors, the intermediate parts and the tightening system are constructed in such a way that they can be remote control manipulated.
